# EUROPÄISCHE PATENTSCHRIFT

(11) **EP 2 323 463 B1**
(45) Veröffentlichungstag und Bekanntmachung des Hinweises auf die Patenterteilung: **26.03.2014**
(21) Anmeldenummer: 10013834.6
(22) Anmeldetag: 21.10.2010
(51) Int. Cl.: H05B 33/08, H05B 37/02, B60R 16/03, B60Q 1/00

(54) **Steuergerät zur Ansteuerung einer Beleuchtungseinrichtung eines Kraftfahrzeugs, sowie Beleuchtungseinrichtung für ein Kraftfahrzeug mit einem solchen Steuergerät**
Control device for controlling a lighting device of a motor vehicle and lighting device for a motor vehicle with such a device
Appareil de commande destiné à la commande d'un dispositif d'éclairage d'un véhicule automobile et dispositif d'éclairage pour un véhicule automobile doté d'un tel dispositif de commande

(30) Priorität: 17.11.2009 DE 102009054371
(43) Veröffentlichungstag der Anmeldung: 18.05.2011
(73) Patentinhaber: Automotive Lighting Reutlingen GmbH, 72762 Reutlingen (DE)
(72) Erfinder: Schnerr, Michael, 70565 Stuttgart (DE); Bormann, Uwe, 89520 Heidenheim (DE)
(74) Vertreter: DREISS Patentanwälte PartG mbB

(56) Entgegenhaltungen:
- EP-A1- 1 555 857
- DE-A1- 10 311 396
- US-A1- 2009 021 955

## Beschreibung

Die vorliegende Erfindung betrifft ein Steuergerät zur Ansteuerung einer Beleuchtungseinrichtung eines Kraftfahrzeugs gemäß dem Oberbegriff des Patentanspruchs 1. Des Weiteren betrifft die Erfindung eine Beleuchtungseinrichtung für ein Kraftfahrzeug gemäß dem Oberbegriff des Anspruchs 17.

Ein Steuergerät mit den Merkmalen des Oberbegriffs des Anspruchs 1 ist bspw. aus der US 2009/0021955 A1 bekannt. Ferner ist aus der DE 10 2006 031 679 A1 ein Steuergeräte bekannt, bei dem die Energie zur Versorgung der Beleuchtungseinrichtung, insbesondere der Lichtquellen der Beleuchtungseinrichtung, von einer ersten Stufe des Steuergeräts, dem zentralen Lichtsteuergerät, zur Verfügung gestellt wird. Die von der ersten Stufe des Steuergeräts zur Verfügung gestellte Energie wird über die zweite Stufe des Steuergeräts, die sog. Baueinheit am Scheinwerfer, unmittelbar den Lichtquellen zur Verfügung gestellt. Das bedeutet, dass die erste Stufe des Steuergeräts bereits die Versorgungsspannung für die Beleuchtungseinrichtung beziehungsweise die Lichtquellen der Beleuchtungseinrichtung zur Verfügung stellen muss. Falls sich Art und/oder Anzahl der mit Energie zu versorgenden Lichtquellen der Beleuchtungseinrichtung ändern, muss die Hardware der ersten Stufe des Steuergeräts, insbesondere die darin enthaltene Wandlereinrichtung zur Bereitstellung der Versorgungsspannung, völlig neu entwickelt und konstruiert werden, damit die von der ersten Stufe zur Verfügung gestellte Versorgungsspannung an die neuen Anforderungen der in Art und/oder Anzahl geänderten Lichtquellen angepasst ist. Es ist also nicht möglich, das bekannte Steuergerät, insbesondere die erste Stufe des bekannten Steuergeräts, für verschiedene Beleuchtungseinrichtungen mit in Art und/oder Anzahl veränderten Lichtquellen unverändert einzusetzen.

Ausgehend von dem beschriebenen Stand der Technik liegt der vorliegenden Erfindung deshalb die Aufgabe zugrunde, das Steuergerät derart auszugestalten und weiterzubilden, dass es eine stabile Energieversorgung der zweiten Stufen des Steuergeräts ermöglicht.

Zur Lösung dieser Aufgabe wird ein Steuergerät mit den Merkmalen des Anspruchs 1 vorgeschlagen. Insbesondere wird vorgeschlagen, dass die mindestens eine erste Stufe des Steuergeräts die elektrische Energie zur Versorgung der Beleuchtungseinrichtung zur Verfügung stellt und dass die mindestens eine zweite Stufe die von der mindestens einen ersten Stufe zur Verfügung gestellte Energie an die mindestens eine Lichtquelle der Beleuchtungseinrichtung weiterleitet, wobei die mindestens eine erste Stufe Mittel zur Erzeugung einer konstanten Zwischenspannung und Mittel zur Beaufschlagung der mindestens einen zweiten Stufe mit der Zwischenspannung aufweist, und wobei die mindestens eine zweite Stufe Mittel zum Wandeln der anliegenden Zwischenspannung in eine zur Versorgung der mindestens einen Lichtquelle geeignete Versorgungsspannung aufweist.

Der Begriff der Intelligenz zur Ansteuerung der Beleuchtungseinrichtung umfasst dabei insbesondere die gesamte Intelligenz oder zumindest die wesentliche Intelligenz, die zur Ansteuerung der Beleuchtungseinrichtung aufgewendet wird. Dies schließt nicht aus, dass die erste Stufe des Steuergeräts Signale eines übergeordneten Fahrzeugsteuergeräts erhält. Dies kann zum Beispiel für eine Leuchtweiteregelung sinnvoll sein, bei der Sensorinformationen zur Fahrzeugneigung in dem übergeordneten Fahrzeugsteuergerät ausgewertet werden, und bei der das zentrale Fahrzeugsteuergerät entsprechende Ergebnisse der Auswertung an die erste Stufe übergibt. Die gesamte Intelligenz, mit der daraus Signale zur Ansteuerung der Beleuchtungseinrichtung gebildet werden, wird durch die erste Stufe des Steuergeräts realisiert. Es ist auch möglich, dass die zweiten Stufen verschiedener Beleuchtungseinrichtungen eines Fahrzeugs über ein Bussystem miteinander kommunizieren. Aber auch in diesem Fall erfolgt die Bildung der Ansteuersignale durch die erste Stufe, so dass diese zumindest den wesentlichen Teil der Intelligenz zur Ansteuerung der Beleuchtungseinrichtung aufweist.

Die Intelligenz zur Ansteuerung der Beleuchtungseinrichtung wird durch eine Steuereinheit, beispielsweise in Form eines programmierbaren Mikroprozessors, realisiert. Durch einfaches Umprogrammieren der Steuereinheit kann diese zur Ansteuerung unterschiedlicher Beleuchtungseinrichtungen eingesetzt werden. Es ist aber auch denkbar, dass die in der mindestens einen ersten Stufe vorhandene Intelligenz zur Ansteuerung der Beleuchtungseinrichtung bereits zur Ansteuerung unterschiedlicher Beleuchtungseinrichtungen ausgelegt ist und zur Ansteuerung der gewünschten Beleuchtungseinrichtung einfach der geeignete Ansteuerungsmechanismus ausgewählt wird. Je nach Ausgestaltung der Beleuchtungseinrichtung, die von dem Steuergerät angesteuert und mit Energie versorgt werden soll, kann dann eine oder mehrere der abgelegten Ansteuerungs- und Energieversorgungsmechanismen ausgewählt und zur Ansteuerung und Energieversorgung der Beleuchtungseinrichtung herangezogen werden. Die in dem Steuergerät abgelegten verschiedenen Ansteuerungs- und Energieversorgungsmechanismen können als Teile eines Computerprogramms oder als Datensätze in einem Speicher des Steuergeräts abgelegt sein und bei Bedarf aufgerufen und abgearbeitet beziehungsweise in ein Ansteuerprogramm geladen werden. Ein Vorteil des erfindungsgemäßen Steuergeräts besteht darin, dass zur Ansteuerung unterschiedlicher Beleuchtungseinrichtungen, die sich insbesondere in Art und/oder Anzahl der Lichtquellen voneinander unterscheiden, zumindest hardwaremäßig auf ein und dieselbe erste Stufe des Steuergeräts zurückgegriffen werden kann. Es ist also nicht erforderlich, dass zur Ansteuerung unterschiedlicher Beleuchtungseinrichtungen die erste Stufe des Steuergeräts von der Hardware her neu entwickelt und konstruiert werden muss. Vielmehr kann die erste Stufe des Steuergeräts als eine Standardkomponente ausgebildet sein, die unabhängig von der anzusteuernden und mit Energie zu versorgenden Beleuchtungseinrichtung zumindest hardwaremäßig stets gleich ausgebildet sein kann. Sollte eine Umprogrammierung der ersten Stufe des Steuergeräts zur Ansteuerung und Energieversorgung einer anderen Beleuchtungseinrichtung erforderlich sein, kann dies ohne großen Aufwand schnell und kostengünstig gemacht werden.

Die zweite Stufe des Steuergeräts ist dagegen nicht als eine Standardkomponente ausgebildet, sondern wird je nach Anwendungsfall an die anzusteuernde Beleuchtungseinrichtung, insbesondere an die Art und/oder Anzahl der anzusteuernden Lichtquellen, individuell angepasst. Die zweite Stufe des Steuergeräts ist vorzugsweise ohne eigene Intelligenz, beispielsweise in Form einer Steuereinheit oder eines Mikroprozessors, ausgebildet. Ihre wichtigste Aufgabe ist es, die von der ersten Stufe des Steuergeräts zur Verfügung gestellte Zwischenspannung auf die zur Energieversorgung der Beleuchtungseinrichtung, insbesondere der Lichtquellen der Beleuchtungseinrichtung, erforderliche Spannung zu wandeln. Die von der ersten Stufe generierten Ansteuersignale werden von der zweiten Stufe praktisch unverändert an die anzusteuernden Komponenten der Beleuchtungseinrichtung, insbesondere die Lichtquellen, weitergeleitet.

Da die Intelligenz zur Ansteuerung der Beleuchtungseinrichtung beziehungsweise der Lichtquellen in der ersten Stufe des Steuergeräts vorgesehen ist, ist zwischen der ersten Stufe und der zweiten Stufe des Steuergeräts eine Kommunikationsverbindung vorgesehen, über die Ansteuersignale zum An-/Abschalten und/oder zum Takten der Lichtquellen, beispielsweise mittels eines PWM-Steuersignals, übermittelt werden können. Ebenso ist es denkbar, über die Kommunikationsverbindung Diagnoseinformationen über die Lichtquellen und/oder die zweite Stufe des Steuergeräts von der zweiten Stufe an die erste Stufe des Steuergeräts zu übermitteln. Die Kommunikationsverbindung umfasst beispielsweise nicht hochstromfähige Steuersignalleitungen oder ein Bussystem, das zur Übertragung von Signalen und Informationen nach einem bestimmten Kommunikationsprotokoll ausgebildet ist. Falls die Kommunikationsverbindung zwischen der ersten Stufe und der zweiten Stufe des Steuergeräts als ein Bussystem ausgebildet ist, muss die zweite Stufe des Steuergeräts ebenfalls über eine Steuereinheit oder einen Kommunikationscontroller, beispielsweise in Form eines Mikroprozessors, verfügen, um in der zweiten Stufe den Empfang und das Versenden von Daten über das Bussystem zu koordinieren. Aber selbst in diesem Fall ist die Intelligenz zur Ansteuerung der Beleuchtungseinrichtung, insbesondere der Lichtquellen, in der ersten Stufe des Steuergeräts ausgebildet, da die Steuereinheit beziehungsweise der Mikroprozessor der zweiten Stufe des Steuergeräts keine Ansteueralgorithmen für die Ansteuerung der Lichtquellen umfasst.

Die Unteransprüche haben vorteilhafte Ausgestaltungen der vorliegenden Erfindung zum Gegenstand. Bevorzugte Ausgestaltungen, weitere Merkmale und besondere Vorteile der Erfindung werden nachfolgend anhand der Figuren näher erläutert. Es zeigen:
- Figur 1: eine erfindungsgemäße Beleuchtungseinrichtung mit einem erfindungsgemäßen Steuergerät gemäß einer bevorzugten Ausführungsform;
- Figur 2: eine schematische Ansicht des erfindungsgemäßen Steuergeräts gemäß einer bevorzugten Ausführungsform; und
- Figur 3: eine zweite Stufe eines erfindungsgemäßen Steuergeräts gemäß einer bevorzugten Ausführungsform.

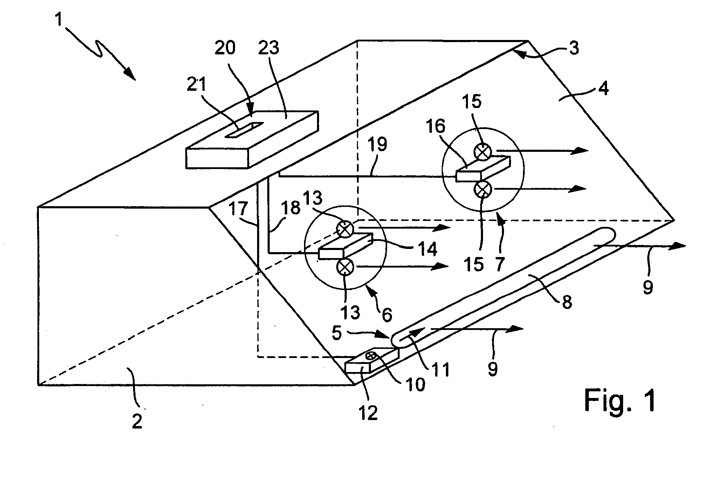

Eine erfindungsgemäße Beleuchtungseinrichtung für ein Kraftfahrzeug ist in Figur 1 in ihrer Gesamtheit mit dem Bezugszeichen 1 bezeichnet. Die Beleuchtungseinrichtung 1 ist als ein Kraftfahrzeugscheinwerfer ausgebildet. Selbstverständlich kann die vorliegende Erfindung jedoch auch in Verbindung mit Heck- oder Seitenleuchten eines Kraftfahrzeugs oder beliebig anderen Leuchten des Kraftfahrzeugs realisiert werden. Es ist sogar denkbar, die Erfindung anhand einer Innenraumbeleuchtung eines Kraftfahrzeugs zu realisieren.

Die Beleuchtungseinrichtung 1 umfasst ein Gehäuse 2, das vorzugsweise aus Kunststoff besteht. Das Gehäuse 2 umfasst eine Lichtaustrittsöffnung 3, die durch eine lichtdurchlässige Abdeckscheibe 4, die vorzugsweise aus einem transparenten Kunststoff gefertigt ist, verschlossen ist. Die Abdeckscheibe 4 kann als eine klare Scheibe ohne optisch wirksame Profile ausgebildet sein. Es ist aber auch denkbar, dass die Scheibe 4 zumindest bereichsweise optisch wirksame Profile, bspw. in Form von Prismen, aufweist.

Im Inneren des Gehäuses 2 sind mehrere Lichtmodule 5, 6, 7 angeordnet. Die Lichtmodule 5, 6, 7 dienen zur Erzeugung einer gewünschten Lichtverteilung. Es ist denkbar, dass jedes der Lichtmodule 5, 6, 7 alleine eine eigene, von den durch die anderen Lichtmodulen erzeugten Lichtverteilungen abweichende Lichtverteilung erzeugt. Es ist aber auch denkbar, dass mehrere Lichtmodule 5, 6, 7 zur Erzeugung einer gewünschten Lichtverteilung zusammenarbeiten, beispielsweise indem eines der Lichtmodule eine erste Lichtverteilung mit einer Hell-Dunkel-Grenze und einer großen horizontalen Streuung erzeugt, und ein weiteres Lichtmodul eine relativ stark konzentrierte Lichtverteilung (einen sogenannten Spot) erzeugt, der die erste Lichtverteilung, beispielsweise unterhalb der Hell-Dunkel-Grenze im Bereich eines Übergangs von einem horizontalen Abschnitt der Hell-Dunkel-Grenze zu einem schräg ansteigenden Abschnitt der Hell-Dunkel-Grenze, überlagert. Beide Lichtmodule zusammen erzeugen so eine besonders gute abgeblendete Lichtverteilung mit einer großen horizontalen Streuung und vorteilhaften hohen Helligkeitswerten unmittelbar unterhalb der Hell-Dunkel-Grenze auf der Fahrbahn.

In dem dargestellten Ausführungsbeispiel in Figur 1 erzeugt das erste Lichtmodul 5 ein Stand- oder Positionslicht und/oder ein Tagfahrlicht. Darüber hinaus wäre es denkbar, dass das Lichtmodul 5 zur Erzeugung eines Blinklichts dient. Das Lichtmodul 5 umfasst einen Lichtleiter 8, der sich quer zu einer Lichtaustrittsrichtung 9 im Inneren und an der Unterseite des Scheinwerfergehäuses 2, im vorderen Bereich nahe an der Abdeckscheibe 4 erstreckt. Außerdem umfasst das Lichtmodul 5 mindestens eine Lichtquelle 10, wobei zumindest ein Teil des von der Lichtquelle 10 ausgesandten Lichts in Richtung eines Pfeils 11 über eine Lichteinkoppelfläche in den Lichtleiter 8 eingekoppelt wird. Vorzugsweise verfügt das Lichtmodul 5 auch über Mittel zum Bündeln des von der Lichtquelle 10 ausgesandten Lichts (nicht dargestellt), beispielsweise in Form eines Reflektors oder einer Vorsatzoptik. Eine Vorsatzoptik besteht aus einem transparenten Glas- oder Kunststoffmaterial und ist so ausgebildet, dass über eine Einkoppelfläche in die Vorsatzoptik eingekoppeltes Licht über Totalreflexion gebündelt wird, bevor es über eine Auskoppelfläche der Vorsatzoptik aus dieser wieder austritt. Durch die Verwendung von Mitteln zum Bündeln des von der Lichtquelle 10 ausgesandten Lichts kann ein größerer Teil des Lichts in den Lichtleiter 8 eingekoppelt werden, wodurch die Effizienz des Lichtmoduls 5 gesteigert wird. Das in den Lichtleiter 8 eingekoppelte Licht 11 wird mittels Totalreflexion den Lichtleiter 8 entlang geleitet. Über die Länge des Lichtleiters 8 verteilt sind Auskoppelelemente (nicht dargestellt) vorgesehen, die jeweils einen Teil des eingekoppelten Lichts 11 aus dem Lichtleiter 8 über eine Lichtauskoppelfläche in Lichtaustrittsrichtung 9 auskoppeln.

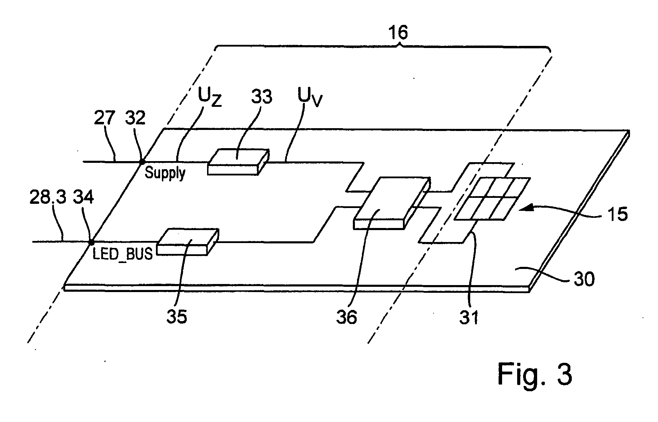

Die mindestens eine Lichtquelle 10 umfasst vorzugsweise Halbleiterlichtquellen, insbesondere Leuchtdioden (LEDs). Der Lichtquelle 10 ist eine zweite Stufe 12 eines erfindungsgemäßen Steuergeräts zugeordnet. In dem dargestellten Ausführungsbeispiel ist die zweite Stufe 12 des Steuergeräts sogar auf einer gemeinsamen Platine mit der Halbleiterlichtquelle 10 angeordnet. Dies wird weiter unten anhand der Figur 3 näher erläutert.

Durch das weitere Lichtmodul 6 der Beleuchtungseinrichtung 1 kann beispielsweise eine Abblendlichtverteilung erzeugt werden. Selbstverständlich könnte durch das Lichtmodul 6 auch eine beliebig andere Primär- oder Sekundärlichtverteilung, beispielsweise eine Nebellicht-, Fernlicht- oder sogar eine adaptive Lichtverteilung, erzeugt werden. Bei der adaptiven Lichtverteilung variiert die Lichtverteilung in Abhängigkeit von einem Zustand des Kraftfahrzeugs (zum Beispiel Geschwindigkeit, Lenkwinkel, Position, Blinkeraktivierung, etc.) und/oder in Abhängigkeit von Umgebungsparametern des Kraftfahrzeugs (zum Beispiel Wetter, Fahrbahnbeschaffenheit, entgegenkommende oder vorausfahrende Verkehrsteilnehmer, Verkehrsdichte, etc.).

Zur Erzeugung der vorgesehenen Lichtverteilung umfasst das Lichtmodul 6 mindestens ein Reflexions- und/oder mindestens ein Projektionsmodul. Bei einem Reflexionsmodul wird das von mindestens einer Lichtquelle ausgesandte Licht durch eine Primäroptik, beispielsweise in Form eines Reflektors, zur Erzeugung der gewünschten Lichtverteilung auf die Fahrbahn vor das Kraftfahrzeug reflektiert. Bei einem Projektionsmodul wird das von der mindestens einen Lichtquelle ausgesandte Licht nach der Bündelung durch eine Primäroptik durch eine Sekundäroptik, beispielsweise in Form einer Projektionslinse, zur Erzeugung der gewünschten Lichtverteilung auf die Fahrbahn vor das Kraftfahrzeug projiziert. Das Lichtmodul 6 umfasst mindestens eine Lichtquelle 13, in dem dargestellten Ausführungsbeispiel zwei Lichtquellen 13. Die Lichtquellen 13 können als Glühlampen, Gasentladungslampen oder als Halbleiterlichtquellen, insbesondere als Leuchtdioden (LEDs), ausgebildet sein.

Den Lichtquellen 13 ist eine weitere zweite Stufe 14 des erfindungsgemäßen Steuergerätes zugeordnet. In dem dargestellten Ausführungsbeispiel sind die Lichtquellen 13 auf der gleichen Platine wie die zweite Stufe 14 angeordnet. Dies wird weiter unten anhand der Figur 3 näher erläutert. Insbesondere ist eine der Lichtquellen 13 an der Oberseite der zweiten Stufe 14 und die andere Lichtquelle 13 an der Unterseite der zweiten Stufe 14 des Steuergeräts angeordnet. Falls die Lichtquellen 13 als Leuchtdioden ausgebildet sind, wäre es sogar denkbar, dass die zweite Stufe 14 des Steuergeräts auf einer gemeinsamen Platine mit den Lichtquellen 13 angeordnet ist. Der Platine der zweiten Stufe 14 des Steuergeräts kann ein Kühlkörper zugeordnet sein, oder die Platine ist sogar als integraler Bestandteil eines Kühlkörpers ausgebildet.

Es ist denkbar, dass die beiden Lichtquellen 13 beide einem Reflexionsmodul oder einem Projektionsmodul zugeordnet sind. Es ist auch denkbar, dass eine der Lichtquellen 13 einem Reflexionsmodul und die andere Lichtquelle 13 einem Projektionsmodul zugeordnet ist. Die Details der Lichtmodule, insbesondere Primär- und Sekundäroptik sowie evtl. vorhandene Blendenanordnungen, sind in Figur 1 nicht gezeigt. Es ist denkbar, dass jede der Lichtquellen 13 mit dem ihr zugeordneten Lichtmodultyp (Reflexions- oder Projektionsmodul) eine eigene, von der von der anderen Lichtquelle 13 und dem dieser zugeordneten Lichtmodultyp erzeugten Lichtverteilung abweichende Lichtverteilung erzeugt. Die von den Lichtquellen 13 und den ihnen zugeordneten Lichtmodultypen erzeugten unterschiedlichen Lichtverteilungen können jede für sich einer gewünschten Lichtverteilung (zum Beispiel Abblendlicht, Fernlicht, Nebellicht etc.) entsprechen. Alternativ ist es aber auch möglich, dass die gewünschte Gesamtlichtverteilung des Lichtmoduls 6 durch eine Überlagerung der einzelnen, von den Lichtquellen 13 und den ihnen zugeordneten Lichtmodultypen erzeugten Teillichtverteilungen erzeugt wird.

Das dritte Lichtmodul 7 der Beleuchtungseinrichtung 1 kann ähnlich dem Lichtmodul 6 ausgebildet sein. Die hinsichtlich des Lichtmoduls 6 gemachten Ausführungen gelten in entsprechender Weise auch für das dritte Lichtmodul 7. Das Lichtmodul 7 kann eine von der von dem Lichtmodul 6 erzeugten Lichtverteilung abweichende Lichtverteilung erzeugen. Diese kann für sich alleine genommen bereits eine gewünschte Lichtverteilung (zum Beispiel Abblendlicht, Fernlicht, Nebellicht, etc.) bilden. Alternativ ist es auch denkbar, dass die von dem Lichtmodul 7 erzeugte Lichtverteilung eine Teillichtverteilung ist, die zusammen mit der Teillichtverteilung des Lichtmoduls 6 durch Überlagerung der beiden Teillichtverteilungen die gewünschte Lichtverteilung bildet. Gemäß einer bevorzugten Ausführungsform der Erfindung erzeugt das Lichtmodul 6 eine Abblendlicht- oder Fernlichtverteilung und das Lichtmodul 7 eine Fernlichtbeziehungsweise Abblendlichtverteilung, so dass jedes Lichtmodul 6, 7 für sich alleine eine gewünschte Lichtverteilung (Abblendlicht- oder Fernlichtverteilung) erzeugt. Das dritte Lichtmodul 7 weist mindestens eine Lichtquelle 15, in dem dargestellten Beispiel zwei Lichtquellen 15, auf, die vorzugsweise als Glühlampen oder Leuchtdioden (LEDs) ausgebildet sind. Die Lichtquellen 15 sind einer weiteren zweiten Stufe 16 des erfindungsgemäßen Steuergeräts zugeordnet.

Die zweiten Stufen 12, 14, 16 des erfindungsgemäßen Steuergeräts der Beleuchtungseinrichtung 1 stehen über Kommunikationsverbindungen 17, 18, 19 mit mindestens einer ersten Stufe 20 des Steuergeräts in Verbindung. Die Kommunikationsverbindungen 17, 18, 19 dienen zur Übermittlung von Ansteuersignalen von der ersten Stufe 20 des Steuergeräts an die zweiten Stufen 12, 14, 16. Die Kommunikationsverbindungen 17, 18, 19 umfassen beispielsweise nichthochstromfähige Steuersignalleitungen und/oder ein Bussystem, das zur Übertragung von Signalen oder Informationen nach einem bestimmten Kommunikationsprotokoll ausgebildet ist. Das Bussystem kann ein einfacher Eindrahtbus oder als ein mehrdrahtiger Bus sein. Die Datenübertragung über das Bussystem zwischen der ersten Stufe 20 und den zweiten Stufen 12, 14, 16 des Steuergeräts muss nicht unbedingt nach einem standardisierten Protokoll (zum Beispiel LIN, CAN, etc.) erfolgen, sondern kann auch nach einem proprietären Busprotokoll erfolgen, das speziell für eine Informationsübertragung in dem beschriebenen Fall entwickelt wurde.

Außerdem gibt es zwischen der ersten Stufe 20 und den zweiten Stufen 12, 14, 16 des Steuergeräts noch eine Energieversorgungsleitungsstruktur. Die Energieversorgungsleitungsstruktur ist der besseren Übersichtlichkeit wegen in Figur 1 nicht eingezeichnet. Über die Energieversorgungsleitungsstruktur werden die zweiten Stufen 12, 14, 16 von der ersten Stufe 20 mit einer vorgegebenen konstanten Zwischenspannung versorgt. In den zweiten Stufen 12, 14, 16 sind geeignete Wandlerelemente vorgesehen, welche die von der ersten Stufe 20 erhaltene Zwischenspannung auf einen je nach Anzahl, Art und/oder Verschaltung der mit Energie zu versorgenden Lichtquellen 10, 13, 15 geeignete Versorgungsspannung umwandeln.

Die erste Stufe 20 des erfindungsgemäßen Steuergeräts kann in einem eigenen, von dem Gehäuse 2 der Beleuchtungseinrichtung 1 separaten Gehäuse 23 an der Außenseite des Scheinwerfergehäuses 2 oder an anderer Stelle außerhalb der Beleuchtungseinrichtung 1 angeordnet sein. Selbstverständlich ist es auch denkbar, dass die erste Stufe 20 des Steuergeräts im Inneren des Scheinwerfergehäuses 2 angeordnet ist, wobei dann auf ein separates Gehäuse 23 für die erste Stufe 20 verzichtet werden kann. Die Anordnung der ersten Stufe 20 außerhalb des Scheinwerfergehäuses 2 hat den Vorteil, dass durch die erste Stufe 20 während ihres Betriebs erzeugte Wärme besser an die Umgebung abgegeben werden kann. Dies kann noch dadurch verbessert werden, dass das Gehäuse 23 für die erste Stufe 20 aus Metall (z.B. Aluminiumdruckguss) oder einem anderen besonders gut thermisch leitfähigen Material besteht. Das Gehäuse 23 für die erste Stufe 20 des Steuergeräts muss nach außen hin nicht vollständig abgeschlossen ausgebildet sein. Es ist denkbar, dass die Unterseite des Gehäuses 23 für die erste Stufe 20 durch das Gehäuse 2 der Beleuchtungseinrichtung 1 gebildet wird. In diesem Fall müsste dann das Gehäuse 23 für die erste Stufe 20 beispielsweise mittels einer Dichtlippe möglichst gut gegen Feuchtigkeit und/oder Schmutzpartikel, gegen das Gehäuse 2 der Beleuchtungseinrichtung abgedichtet werden. Unterhalb der ersten Stufe 20 des Steuergeräts ist eine Öffnung im Scheinwerfergehäuse 2 vorgesehen, durch die die Kommunikationsverbindungen 17, 18, 19 sowie die Energieversorgungsleitungsstruktur zu den zweiten Stufen 12, 14, 16 des Steuergeräts in das Innere des Scheinwerfers 1 geführt werden.

Die erste Stufe 20 des Steuergeräts verfügt über ein Steckerelement 21, das in dem Ausführungsbeispiel aus Figur 1 in das Gehäuse 23 der ersten Stufe 20 eingelassen ist. Über das Steckerelement 21 werden die erste Stufe 20 des Steuergeräts und damit auch die zweiten Stufen 12, 14, 16 und letzten Endes auch die Lichtquellen 10, 13, 15 der Beleuchtungseinrichtung 1 mit Energie und mit Befehlen zur Ansteuerung versorgt. So ist es beispielsweise denkbar, dass über das Steckerelement 21 eine Spannung der Fahrzeugbatterie, beispielsweise 12V, 24V oder gar 48V, an die erste Stufe 20 des Steuergeräts angelegt wird. Außerdem ist es denkbar, dass Befehle zur Ansteuerung der Lichtquellen 10, 13, 15, beispielsweise in Form eines Lichtschaltersignals oder eines Blinkerhebelsignals, angelegt werden. Die Übermittlung der Befehle zur Ansteuerung der Lichtquellen 10, 13, 15 kann über nicht hochstromfähige Steuersignalleitungen oder über ein Bussystem erfolgen, das zur Übertragung von Signalen und Informationen nach einem bestimmten Kommunikationsprotokoll ausgebildet ist.

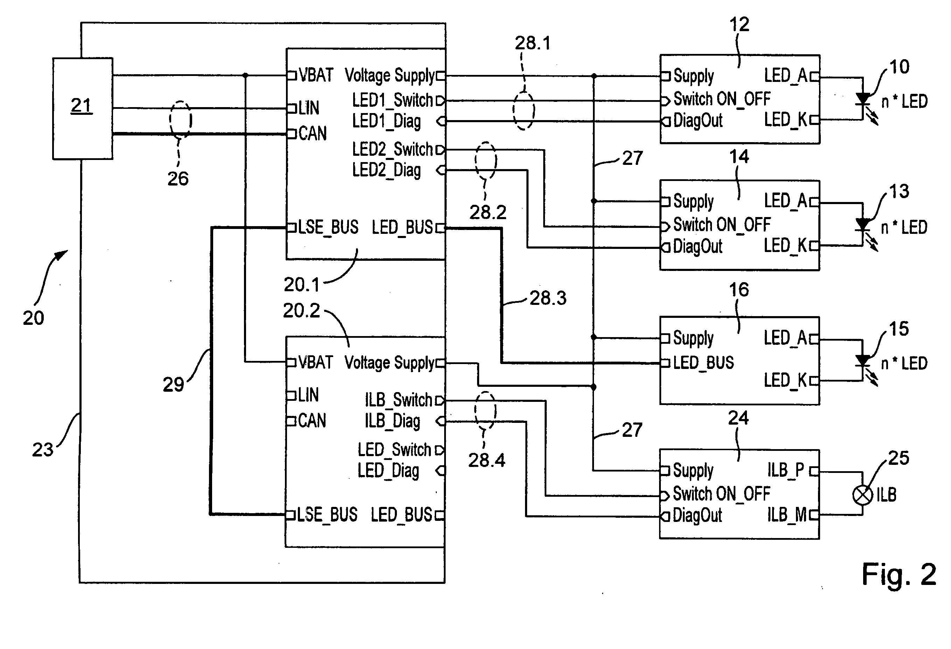

In Figur 2 ist ein bevorzugtes Ausführungsbeispiel des erfindungsgemäßen Steuergeräts dargestellt. Das Steuergerät umfasst mindestens eine erste Stufe 20 sowie mindestens eine zweite Stufe 12, 14, 16, 24. In dem dargestellten Ausführungsbeispiel ist die erste Stufe 20 zweifach ausgeführt, das heißt es ist eine erste erste Stufe 20.1 und eine zweite erste Stufe 20.2 vorgesehen. Außerdem verfügt das dargestellte Steuergerät über insgesamt vier zweite Stufen 12, 14, 16, 24. Dabei dienen die zweiten Stufen 12, 14, 16 zur Ansteuerung von mindestens einer Leuchtdiode 10, 13, 15, wohingegen die zweite Stufe 24 des Steuergeräts zur Ansteuerung und Energieversorgung einer anders ausgebildeten Lichtquelle, beispielsweise einer herkömmlichen Glühlampe (Illumination Bulb, ILB), dient. Selbstverständlich könnte die zweite Stufe 24 auch zur Ansteuerung und Energieversorgung mindestens einer Leuchtdiode (LED) oder einer beliebig anderen Lichtquelle ausgebildet sein.

Ein wesentlicher Aspekt der vorliegenden Erfindung besteht darin, dass die ersten Stufen 20.1, 20.2 des Steuergeräts jeweils als ein Standard-Modul ausgebildet sind, das flexibel für unterschiedlich ausgestaltete Beleuchtungseinrichtungen 1, die sich insbesondere hinsichtlich der Art, Anzahl und/oder Verschaltung ihrer Lichtquellen 10, 13, 15, 25 voneinander unterscheiden, eingesetzt werden kann. Jede der ersten Stufen 20.1, 20.2 hat Standardeingänge, die zumindest einen Anschluss an die Fahrzeugbatterie VBAT sowie mindestens eine erste Kommunikationsverbindung 26 zu einem übergeordneten Steuergerät des Kraftfahrzeugs, beispielsweise einem sogenannten Body-Controller, umfasst. Die erste Kommunikationsverbindung kann nichthochstromfähige Steuersignalleitungen oder, wie in dem dargestellten Ausführungsbeispiel, mindestens ein Bussystem LIN und/oder CAN umfassen. Selbstverständlich kann außer den genannten Bussystemen LIN, CAN auch ein beliebig anderes Bussystem, beispielsweise ein FlexRay-Bussystem, eingesetzt werden.

Des Weiteren verfügt jede der ersten Stufen 20.1, 20.2 des Steuergeräts über Standard-Ausgänge. Diese umfassen mindestens einen Anschluss "Voltage Supply", an dem eine von der ersten Stufe 20.1, 20.2 aus der Batteriespannung VBAT erzeugte, konstante Zwischenspannung U_Z anliegt. Diese Zwischenspannung U_Z wird über eine Energieversorgungsleitungsstruktur 27 den zweiten Stufen 12, 14, 16, 24 des Steuergeräts zur Verfügung gestellt. Außerdem umfassen die Standard-Ausgänge der ersten Stufen 20.1, 20.2 mindestens eine zweite Kommunikationsverbindung 28 zur Beaufschlagung der zweiten Stufen 12, 14, 16, 24 mit den in den ersten Stufen 20.1, 20.2 generierten Ansteuersignalen für die Lichtquellen 10, 13, 15, 25. Die Kommunikationsverbindung 28 umfasst bspw. nichthochstromfähige Steuersignalleitungen 28.1, 28.2, 28.4 oder ein Bussystem 28.3, das zur Übertragung von Signalen nach einem bestimmten Kommunikationsprotokoll ausgebildet ist. In dem dargestellten Ausführungsbeispiel sind in der ersten Stufe 20.1 separate Steuersignalleitungen 28.1 und 28.2 für die Ansteuerung unterschiedlicher zweiter Stufen 12 und 14 vorgesehen. Die dritte zweite Stufe 16 des Steuergeräts wird über das Bussystem 28.3 angesteuert. Insgesamt kann die erste Stufe 20.1 des Steuergeräts also drei verschiedene zweite Stufen 12, 14, 16 ansteuern. Selbstverständlich ist es denkbar, mehr Steuersignalleitungen zur Verfügung zu stellen, um mehr als die dargestellten zwei zweite Stufen 12, 14 über Steuersignalleitungen 28.1, 28.2 ansteuern zu können. Ebenso ist es denkbar, mehrere Bussysteme vorzusehen oder über das Bussystem 28.3 mehr als die eine zweite Stufe 16 anzusteuern. Das Bussystem 28.3 und das Kommunikationsprotokoll könnten derart ausgestaltet sein, dass außer der zweiten Stufe 16 über das Bussystem 28.3 eine große Anzahl an weiteren zweiten Stufen des Steuergeräts angesteuert werden können.

Die nichthochstromfähigen Steuersignalleitungen 28.1, 28.2, 28.3 haben gegenüber dem Bussystem 28.3 den Vorteil, dass die zweiten Stufen 12, 14, 24 besonders einfach ausgestaltet werden können. Insbesondere benötigen sie keinen Kommunikationscontroller mit einem Mikroprozessor zur Abwicklung (Steuerung und Koordination) der Kommunikation und Datenübertragung über ein Bussystem in den zweiten Stufen 12, 14, 24. Die Ausgestaltung der zweiten Kommunikationsverbindung 28 als Bussystem 28.3 hat den Vorteil, dass mit geringem Leitungsaufwand eine Vielzahl an zweiten Stufen angesteuert werden kann. Zudem ist das System besonders leicht skalierbar, da zusätzliche zweite Stufen zur Ansteuerung zusätzlicher Lichtquellen problemlos vorgesehen werden können. Sie müssen lediglich über einen geeigneten Kommunikationscontroller verfügen und an das Bussystem 28.3 angeschlossen sein. Es ist nicht erforderlich, hierfür zusätzliche Steuersignalleitungen vorzusehen.

Die Steuersignalleitungen zwischen der ersten Stufe 20.1 und der zweiten Stufe 12 umfassen beispielsweise eine erste Leitung, die zwischen einem Ausgang "LED1_Switch" und einem Eingang "SwitchON_OFF" angeschlossen ist, zur Übermittlung von Ansteuersignalen an die zweite Stufe 12 für die mindestens eine Lichtquelle 10. Die entsprechende Steuersignalleitung zwischen der ersten Stufe 20.1 und der zweiten Stufe 14 des Steuergeräts verläuft zwischen einem Ausgang "LED2_Switch" und einem Eingang "SwitchON_OFF". Außerdem umfassen die Steuersignalleitungen 28.1, 28.2 mindestens eine Diagnoseleitung, die zwischen einem Ausgang "DiagOut" der zweiten Stufen 12, 14 und Eingängen "LED1_Diag" und LED2_Diag" der ersten Stufe 20.1 verlaufen. Die Leitungen für das vorzugsweise bidirektionale Bussystem 28.3 verlaufen zwischen Anschlüssen "LED BUS" der ersten Stufe 20.1 und der zweiten Stufe 16.

Die zweite erste Stufe 20.2 umfasst ebenfalls eine zweite Kommunikationsverbindung 28.4, über die Ansteuersignale zur Beaufschlagung der mindestens einen Lichtquelle 25 an die zweite Stufe 24 übermittelt werden. Zu diesem Zweck umfasst die zweite Kommunikationsverbindung 28.4 eine Steuersignalleitung, die zwischen einem Ausgang "ILB_Switch" an der ersten Stufe 20.2 und einem Eingang "SwitchON_OFF" an der zweiten Stufe 24 verläuft. Außerdem umfasst die zweite Kommunikationsverbindung 28.4 eine Diagnoseleitung zur Übertragung von Diagnoseinformationen der Lichtquelle 25 beziehungsweise der zweiten Stufe 24 an die erste Stufe 20.2. Die Diagnoseleitung verläuft zwischen einem Ausgang "DiagOut" der zweiten Stufe 24 und einem Eingang "ILB_Diag" der ersten Stufe 20.2. An den Anschlüssen "LED_Switch" und "LED_Diag" ist bei der ersten Stufe 20.2 in dem dargestellten Ausführungsbeispiel keine zweite Kommunikationsverbindung zu einer weiteren zweiten Stufe des Steuergeräts angeschlossen. Auch an den Anschluss "LED_BUS" der ersten Stufe 20.2 ist kein Bussystem als zweite Kommunikationsverbindung zu einer weiteren zweiten Stufe vorgesehen. Diese Anschlüsse sind in der dargestellten Ausführungsform nicht belegt.

Die beiden ersten Stufen 20.1, 20.2 liegen beide an der Batteriespannung VBAT an. Zudem sind die beiden ersten Stufen 20.1, 20.2 über eine dritte Kommunikationsverbindung 29 zum Austausch von Informationen untereinander verbunden. Es ist denkbar, dass die dritte Kommunikationsverbindung 29 nichthochstromfähige Steuersignalleitungen umfasst. Die dritte Kommunikationsverbindung 29 umfasst in dem dargestellten Ausführungsbeispiel ein Bussystem, das zur Übertragung von Signalen und Informationen nach einem bestimmten Kommunikationsprotokoll ausgebildet ist. Dabei kann die Signalübertragung - wie bei den meisten Bussystemen üblich - in beide Richtungen, also bidirektional erfolgen. Das Kommunikationsprotokoll zur Übertragung von Informationen und Daten über das Bussystem 29 kann ein Standard-Kommunikationsprotokoll, zum Beispiel LIN, CAN oder FlexRay, sein. Selbstverständlich ist es auch denkbar, dass es sich bei dem Kommunikationsprotokoll um ein proprietäres Protokoll handelt, das auf den Einsatz zum Datenaustausch zwischen den beiden ersten Stufen 20.1 ,20.2 ausgerichtet ist. Wenn in einem bestimmten Ausführungsbeispiel mehr als zwei erste Stufen 20.1, 20.2 vorgesehen sind, können diese alle über die dritte Kommunikationsverbindung untereinander Informationen austauschen.
Die Ausgestaltung der ersten Stufe 20 des Steuergeräts mit zwei parallel betriebenen Standard-Steuergerätmodulen 20.1 und 20.2 hat mehrere Vorteile. Zum einen können dadurch mehr als die in einem einzigen Modul 20.1 vorgesehenen zweiten Stufen 12, 14, 16 angesteuert werden. Eine Ansteuerung der zweiten Stufe 24 wäre ohne Einsatz einer zweiten ersten Stufe 20.2 nicht möglich, da die erste Stufe 20.1 keine Kanäle mehr frei hat, über die eine zweite Stufe 24 ohne Busanbindung angesteuert werden könnte. Durch die Kaskadierung der beiden Standard-Steuergerätemodule 20.1 und 20.2 kann außerdem die durch die erste Stufe 20 zur Verfügung gestellte Gesamtleistung des Systems verdoppelt werden. Wenn beispielsweise zur Erzeugung einer besonderen Lichtfunktion, beispielsweise einer Abblendlichtfunktion mittels LEDs, eine Leistung von 60W benötigt wird, kann diese durch die beiden Standard-Steuergerätemodule 20.1, 20.2, die jeweils eine Leistung von 30W liefern können, gemeinsam zur Verfügung gestellt werden. Jedes der Standard-Steuergerätemodule 20.1, 20.2 stellt also eine relativ geringe Leistung, z.B. 30W, zur Verfügung. Sollte in dem einen oder anderen Anwendungsfall eine höhere Leistung, z.B. 60W oder 120W, benötigt werden, werden einfach mehrere, z.B. zwei oder vier, der Standard-Steuergerätemodule 20.1, 20.2 kaskadiert angeordnet.

Wie weiter oben bereits erläutert, ist der mindestens einen zweiten Stufe 12, 14, 16 des Steuergeräts mindestens eine Lichtquelle 10, 13, 15 in Form einer Leuchtdiode (LED) zugeordnet. Jede der zweiten Stufen 12, 14, 16 ist jeweils so ausgestaltet, dass sie die nach Anzahl und/oder Art der Lichtquellen 10, 13, 15 geeignete Versorgungsspannung U_V zur Verfügung stellt. Zu diesem Zweck müssen in der zweiten Stufe 12, 14, 16 geeignete Wandlerelemente vorgesehen sein, welche die von der ersten Stufe 20.1, 20.2 zur Verfügung gestellte Zwischenspannung U_Z in die für den speziellen Anwendungsfall gewünschte Versorgungsspannung U_V wandeln. Deshalb müssen die zweiten Stufen 12, 14, 16 des Steuergeräts an die geplante Anwendung, insbesondere an Art, Anzahl und/oder Verschaltung der Lichtquellen 10, 13, 15 angepasst werden.

Die Intelligenz zum Generieren der Ansteuersignale für die Lichtquellen 10, 13, 15 ist in der ersten Stufe 20.1 des Steuergeräts enthalten. Die Ansteuersignale werden über die zweite Kommunikationsverbindung 28 an die zweiten Stufen 12, 14, 16 des Steuergeräts übermittelt und dort an die Lichtquellen 10, 13, 15 weitergeleitet. So gelangt beispielsweise über das Streckerelement 21 und die erste Kommunikationsverbindung 26 ein Befehl "Blinker ein" zu der ersten Stufe 20.1 des Steuergeräts. Dort wird dann ein geeignetes Ansteuersignal für das Blinklichtmodul, beispielsweise das erste Lichtmodul 5, generiert. Dieses Ansteuersignal kann aus einem zwischen 0 V (Blinker ausgeschaltet) und 5 V (Blinker eingeschaltet) oszillierendem Rechtecksignal bestehen. Dieses Ansteuersignal wird über die Kommunikationsverbindung 28.1 an die zweite Stufe 12 übermittelt. Dort wird das Ansteuersignal dann beispielsweise an den Anschluss LED_A angelegt, wobei der andere Anschluss LED_K auf Masse gelegt wird. Dies führt für die Dauer des Anliegens des Ansteuersignals zu einem Ein- und Ausschalten der Leuchtdiode 10 in dem vom Ansteuersignal vorgegebenen Takt und damit zur Erzeugung einer Blinklichtfunktion durch das Lichtmodul 5.

Gemäß einem anderen Beispiel gelangt ein Befehl "Abblendlicht ein" über das Steckerelement 21 und die erste Kommunikationsverbindung 26 zu der ersten Stufe 20.1 des Steuergeräts. Dieser Befehl wird über die dritte Kommunikationsverbindung 29 an die weitere erste Stufe 20.2 übermittelt. Selbstverständlich wäre es denkbar, auch die andere erste Stufe 20.2 des Steuergeräts direkt an die erste Kommunikationsverbindung 26 anzuschließen. In diesem Fall könnte das Bussystem 29 der dritten Kommunikationsverbindung entfallen. Falls jedoch ein wie auch immer gearteter Informationsaustausch zwischen der einen ersten Stufe 20.1 und der anderen ersten Stufe 20.2 des Steuergeräts gewünscht ist, muss eine dritte Kommunikationsverbindung 29 zwischen den beiden ersten Stufen 20.1, 20.2 vorhanden sein. Aus dem bei der anderen ersten Stufe 20.2 eingehenden Befehl wird dann ein geeignetes Ansteuersignal für die Glühlampe 25 erzeugt, die zusammen mit dem ihr zugeordneten Lichtmodul (umfassend z.B. Primäroptik, Sekundäroptik, Blende, etc.) die Abblendlichtverteilung erzeugt. Aus dem Befehl "Abblendlicht ein" kann beispielsweise ein geeigneter Strom- oder Spannungswert für die Lichtquelle 25 generiert werden, der zur Aktivierung der Lichtquelle 25 und zur Erzeugung der gewünschten Abblendlichtverteilung führt. Das in der ersten Stufe 20.2 generierte Ansteuersignal wird über eine Steuersignalleitung der zweiten Kommunikationsverbindung 28.4 an die zweite Stufe 24 übermittelt und dort an die Gasentladungslampe 25 weitergeleitet.

In Figur 3 ist ein bevorzugtes Ausführungsbeispiel einer zweiten Stufe 16 des erfindungsgemäßen Steuergeräts gezeigt. Zunächst einmal umfassen die Lichtquellen 15 insgesamt sechs matrixartig angeordnete LEDs. Diese sind auf einer Platine 30 angeordnet und über Leitungen 31 kontaktiert. Die Platine 30 mit den LEDs 15 ist einzeln handhabbar und wird auch als LED-Chip bezeichnet. Zur besseren Wärmeableitung von den LEDs 15 kann die Platine 30 entweder teilweise oder vollständig aus einem besonders gut wärmeleitfähigen Material (zum Beispiel Leiterplatte mit Metallkern) gebildet sein. Alternativ kann die Platine 30 auch mit einem Kühlkörper wärmetechnisch gekoppelt oder sogar integraler Bestandteil eines Kühlkörpers sein.

Zusätzlich zu den LEDs 15 und den Leitungen 31 sind gemäß der vorliegenden Erfindung auf der Platine 30 auch elektrische Komponenten zur Realisierung der zweiten Stufe 16 des Steuergeräts angeordnet und verschaltet. Die einzelnen Komponenten und deren Verschaltung sind in Figur 3 lediglich schematisch dargestellt. Sie umfassen zum Einen einen Anschluss 32 ("Supply") für die Energieversorgungsleitungsstruktur 27, über die die von der ersten Stufe 20.1 des Steuergeräts zur Verfügung gestellte Zwischenspannung U_Z an die zweite Stufe 16 angelegt wird. Diese Zwischenspannung U_Z wird mittels geeigneter Wandlerelemente 33 der zweiten Stufe 16 in die Versorgungsspannung U_V für die LEDs 15 umgewandelt. Dabei hängt die Größe der Versorgungsspannung U_V von Art, Anzahl und/oder Verschaltung der LEDs 15 ab. Die Wandlerelemente 33 sind also so auf den speziellen Anwendungsfall ausgerichtet, dass aus der standardmäßig zur Verfügung gestellten konstanten Zwischenspannung U_Z eine für den individuellen Fall passende Versorgungsspannung U_V erzeugt wird. Zusätzlich kann die zweite Stufe 16 Stromreglerelemente umfassen, um den Versorgungsstrom der LEDs 15 auf einem konstanten Wert zu halten.

Darüber hinaus ist auf der Platine 30 ein Anschluss 34 ("LED_BUS") für das Bussystem der zweiten Kommunikationsverbindung 28.3 ausgebildet. Die an dem Bus 28.3 anliegenden Signale und Nachrichten werden empfangen und in einem Kommunikationscontroller 35 der zweiten Stufe 16 verarbeitet. Die Verarbeitung umfasst beispielsweise eine Rückwandlung (ein Decodieren) von eingegangenen Nachrichten, ein Extrahieren von Nutzdaten aus den eingegangen Nachrichten, die Feststellung, ob die eingegangenen Nutzdaten genau für diese zweite Stufe 16 oder möglicherweise für eine andere zweite Stufe 12, 14 oder 24, vorgesehen sind. Die Versorgungsspannung U_V sowie die decodierten Ansteuerbefehle können einer weiteren Bearbeitungseinheit 26 zugeführt werden, in der dann die Spannungs- beziehungsweise Stromsignale für die LEDs 15 ermittelt und an diese angelegt werden. Der Kommunikationscontroller 35 und die Verarbeitungseinheit 36 können auch in einem gemeinsamen Element ausgebildet sein. Dadurch wäre es möglich, dass die Verarbeitungseinheit 36 den Mikroprozessor des Kommunikationscontrollers 35 mit nutzen kann, so dass auf einen zusätzlichen Mikroprozessor für die Verarbeitungseinheit 36 verzichtet werden kann.

Die vorliegende Erfindung ist insbesondere durch die nachfolgend aufgeführten Merkmale und Vorteile gekennzeichnet:
Mit der vorliegenden Erfindung ist es erstmals möglich, sämtliche LED-Lichtfunktionen in ein Standard-Steuergerätekonzept zu integrieren. Dieses umfasst mindestens eine standardisierte erste Stufe sowie mindestens eine ...zweite Stufe. Dadurch wird hinsichtlich der Elektronik erstmals ein modularer Aufbau einer Beleuchtungseinrichtung nach einem Baukastenprinzip möglich. Was in der Mechanik bereits seit Jahren versucht wird, ist nun erstmals auch auf dem Gebiet der Elektronik, das heißt bei der Energieversorgung sowie der Ansteuerung der Beleuchtungseinrichtung, möglich.

Die Erfindung bringt erhebliche Vorteile durch reduzierte Entwicklungskosten und Entwicklungszeiten mit sich. Das Gerät der ersten Stufe 20 bleibt unabhängig von Art, Anzahl und/oder Verschaltung der anzusteuernden Lichtquellen 10, 13, 15, 25 zumindest hinsichtlich der Hardware unverändert. Die LED-Module der zweiten Stufen 12, 14, 16, 24 können einfach an neue Konfigurationen angepasst werden, da die erste Stufe 20 eine konstante Spannungsversorgung unabhängig vom Bordnetz liefert. Die Erfindung hat zudem erhebliche Vorteile bezüglich der Bauelementekosten. Wie oben beschrieben kann durch eine Kaskadierung der ersten Stufe 20.1, 20.2 eine höhere Leistung zur Verfügung gestellt werden, ohne dass hierfür eine Hardwareänderung erforderlich wäre. Auch die LED-Module der zweiten Stufen 12, 14, 16, 24 haben einen geringeren Hardwareaufwand, da durch die erste Stufe 20.1, 20.2 bereits eine Entkopplung vom Bordnetz besteht. Somit kann bei der zweiten Stufe 12, 14, 16, 24 auf einen Verpolschutz an der Platine 30, sowie auf Maßnahmen zur Verbesserung der elektromagnetischen Verträglichkeit (EMV) verzichtet werden. Dies gilt sowohl für Maßnahmen zur Vermeidung von vom Bordnetz hervorgerufener Störungen, die sich auf das Steuergerät auswirken könnten, als auch für Maßnahmen zur Vermeidung von Störungen des Bordnetzes, die durch die zweite Stufe 12, 14, 16, 24 des Steuergeräts hervorgerufen werden könnten. Insbesondere kann auf den Einsatz diesbezüglicher Filter oder ähnlicher elektrischer Bauelemente verzichtet werden.

Schließlich bietet die vorliegende Erfindung auch erhebliche Vorteile bei den Systemkosten. Bei den bisher üblichen Steuergeräten müssen alle Kanäle des Steuergeräts auf die maximal mögliche Leistung ausgelegt werden. Bei dem erfindungsgemäßen zweistufigen Konzept wird die erste Stufe lediglich auf die maximale Leistung des Gesamtsystems ausgelegt. Dies wird anhand eines Beispiels näher erläutert: Bei aus dem Stand der Technik bekannten Steuergeräten werden beispielsweise zwei Wandler mit jeweils 15 Watt für Tagfahrlicht und Blinklicht benötigt. Die abgerufene Leistung im realen System beträgt jedoch nur jeweils 7 Watt. Bei dem erfindungsgemäßen Steuergerät und dem darin realisierten zweistufigen Konzept würde deshalb ein Wandler mit 15 Watt Gesamtleistung zur Versorgung beider Systeme, sowohl des Tagfahrlichts als auch des Blinklichts, genügen. Die StandardKomponente 20.1, 20.2 des Steuergeräts kann also beispielsweise auf eine maximale Leistung von 15 Watt ausgelegt werden. Sollten für bestimmte Anwendungsfälle eine höhere Leistung erforderlich sein, ist es möglich, wie anhand der Figur 2 beschrieben, mehrere Standart-Stufen 20.1, 20.2 kaskadiert anzuordnen. Sollte beispielsweise für einen bestimmten Anwendungsfall eine Gesamtleistung gefordert sein, die dem Drei- oder Mehrfachen der Einzelleistung einer ersten Stufe 20 entsprechen sollte, so können drei oder mehr erste Stufen 20 kaskadiert angeordnet werden.

Durch die erste Stufe 20 wird eine Abkopplung vom Kraftfahrzeugbordnetz durch das Bereitstellen einer konstanten Zwischenspannung erzielt. Die Zwischenspannung ist vorzugsweise höher als die von der Kraftfahrzeugbatterie zur Verfügung gestellte Spannung. Die Zwischenspannung kann dann von den zweiten Stufen 12, 14, 16, 24 auf die zur Versorgung der den zweiten Stufen 12, 14, 16, 24 jeweils zugeordneten Lichtquellen 10, 13, 15, 25 erforderliche Versorgungsspannung heruntertransformiert werden. Außerdem bietet die erste Stufe 20 über die erste Kommunikationsverbindung 26 die Möglichkeit einer Kommunikation mit der Welt außerhalb der Beleuchtungseinrichtung. Des Weiteren ist die erste Stufe 20 verantwortlich für eine Ansteuerung der LED-Module 12, 14, 16, 24 entsprechend ihrer Lichtfunktion. So kann beispielsweise für eine Blinklichtfunktion ein getaktetes Ansteuersignal mit einer Taktung von 0,5 s zur Verfügung gestellt werden. Schließlich ist die erste Stufe 20 des Steuergeräts als eine separate Einheit ausgebildet, die beispielsweise außen an der Beleuchtungseinrichtung angebaut wird. Dadurch ist die erste Stufe 20 einfach tauschbar.

Die zweite Stufe 12, 14, 16, 24 des Steuergeräts erfüllt beispielsweise die Aufgabe einer Stromregelung und einer Überwachung der angeschlossenen Lichtquellen 10, 13, 15, 25. Das LED-Modul befindet sich vorzugsweise unmittelbar an der zugeordneten Lichtquelle 10, 13, 15, 25. Die zweite Stufe 12, 14, 16, 24 kann flexibel an Art, Anzahl und/oder Verschaltung der LEDs 10, 13,15, 25 angepasst werden, zum Beispiel über ein Baukastenprinzip. So ist es denkbar, dass verschieden ausgebildete zweite Stufen 12, 14, 16, 24 für bestimmte Standard-Anwendungsfälle vorgehalten und bei Bedarf eingesetzt werden. Die zweite Stufe 12, 14, 16, 24 ist vorzugsweise zusammen mit der ihr zugeordneten Lichtquelle 10, 13, 15, 25 austauschbar.

Vorteilhaft an der vorliegenden Erfindung ist es, dass es nur eine einzige Variante für die erste Stufe 20 gibt. Damit muss die erste Stufe 20 nur einmal entwickelt, konstruiert und erprobt werden. Für die zweite Stufe 12, 14,16, 24 hat der Anwender die Auswahl aus mehreren Standardmodulen. Die zweite Stufe 12, 14, 16, 24 ist vom Bordnetz entkoppelt. Dadurch ergibt sich ein geringerer Aufwand bei der Filterung und Reaktion auf sonstige Begebenheiten des Bordnetzes. Bei Bedarf an einer höheren Gesamtleistung können mehrere Geräte der ersten Stufe 20.1, 20.2 zusammengeschaltet werden, das heißt alle LED-Lichtfunktionen (zum Beispiel Abblendlicht, Fernlicht, Nebellicht, et cetera) können aus einem oder mehreren Geräten der ersten Stufe 20.1, 20.2 versorgt werden, wie dies beispielhaft in Figur 2 dargestellt ist. Die Geräte der zweiten Stufe 12, 14, 16, 24 können Geräte ohne eigene Intelligenz sein, das heißt An-/Abschalten und Takten der Lichtquellen 10, 13, 15, 25 wird über eine erste Signalleitung erzielt. Eine weitere Diagnoseleitung der zweiten Kommunikationsverbindung 28 ermöglicht eine Diagnose der angeschlossenen Lichtquellen 10, 13, 15, 25 und/oder der zweiten Stufen 12, 14, 16, 24. Die Geräte der zweiten Stufe 12, 14, 16, 24 können Geräte mit einem eigenen Mikroprozessor und einer Ansteuerung über ein Bussystem 28.3 sein, über das Informationen für eine erweiterte Diagnose, Meldungen über Temperaturabregelung, eine Abregelung falls von der ersten Stufe 20 gewünscht, übermittelt beziehungsweise erzielt werden können. Das Gerät der ersten Stufe 20 kann in bestimmten Ausführungsformen eine LED-Konfiguration der Beleuchtungseinrichtung erkennen und zurückmelden, das heißt die auf dem Mikroprozessor der ersten Stufe 20 ablaufende Software zur Ansteuerung und Energieversorgung der Lichtquellen 10, 13, 15, 25 kann sich automatisch an die Gegebenheiten anpassen. Es entstehen somit keine Änderungskosten für die Software beim Einsatz in verschiedenen Scheinwerferkonfigurationen. Die LED-Module 12, 14, 16, 24 können zum Beispiel aus Widerstandslösungen, Linearregler oder (Abwärts-)Wandler bestehen. Die Module 12, 14, 16, 24 der zweiten Stufe können auch Glüh-/Halogenlampen ansteuern, das heißt unterschiedliche Scheinwerferkonfigurationen (LED und Nicht-LED) können ohne Variation der Hardware oder Software realisiert werden. Die Geräte 20 der ersten Stufe können mit verschiedenen Ausstattungsvarianten ohne Einfluss auf die Geräte 12, 14, 16, 24 der zweiten Stufe betrieben werden, zum Beispiel zur Erreichung einer höheren Leistung, eines anderen Kommunikationskonzepts oder auch für die Implementierung von Algorithmen für die Ansteuerung von Funktionen. So ist es beispielsweise denkbar, dass die auf dem Mikroprozessor der Geräte 20 der ersten Stufe ablaufende Software AutoSAR-fähig ist. Bei AutoSAR (Automotive Open System Architecture) handelt es sich um einen internationalen Verbund, mit dem Ziel, einen offenen Standard für Software-Architekturen in Kraftfahrzeugen zu etablieren. Mitglieder sind verschiedene Automobilhersteller und Zulieferer von Elektronikkomponenten.

Bei dem erfindungsgemäßen Steuergerät ist es möglich, das Steuergerät an eine veränderte Bordnetzspannung, beispielsweise 24 Volt oder 48 Volt statt der üblichen 12 Volt, einfach durch Austausch des Geräts 20 der ersten Stufe zu erzielen, wobei die Geräte 12, 14, 16, 24 der zweiten Stufe unverändert weiter verwendet werden können. Neben der Ansteuerung von Lichtfunktionen können in das beschriebene System elektrische Verbraucher verschiedenster Art integriert werden, wie beispielsweise motorische Antriebe, die sich in Leuchtweiteregeleinheiten bzw. Antrieben für Kurvenlichtmodule befinden, oder die zum Bewegen von Blenden dienen. In Abweichung von den dargestellten Ausführungsbeispielen ist es auch möglich, dass die Geräte 20 der ersten Stufe sowie die Geräte 12, 14, 16, 24 der zweiten Stufe in einem gemeinsamen Gehäuse angeordnet sind. Das heißt, für die Realisierung der vorliegenden Erfindung ist lediglich eine funktionale Trennung der beiden Geräte 20 und 12, 14, 16, 24 der ersten und zweiten Stufe, nicht jedoch deren räumliche Trennung erforderlich.

## Patentansprüche

1. Steuergerät zur Ansteuerung einer Beleuchtungseinrichtung eines Kraftfahrzeugs und zur Versorgung der Beleuchtungseinrichtung mit elektrischer Energie, wobei die Beleuchtungseinrichtung mindestens eine Lichtquelle (10, 13, 15, 25) umfasst und das Steuergerät in mehrere Stufen unterteilt ist und mindestens eine erste Stufe (20) und mindestens eine zweite Stufe (12, 14, 16, 24) aufweist, wobei die mindestens eine erste Stufe (20) des Steuergeräts die Intelligenz zur Ansteuerung der Beleuchtungseinrichtung und Mittel (28) zur Beaufschlagung der Beleuchtungseinrichtung mit Ansteuersignalen aufweist und die mindestens eine zweite Stufe (12, 14, 16, 24) des Steuergeräts Mittel (31) zum Beaufschlagen der mindestens einen Lichtquelle (10, 13, 15, 25) mit einer Versorgungsspannung (U_V) und Mittel zum Ansteuern der mindestens einen Lichtquelle (10, 13, 15, 25) in Abhängigkeit von den anliegenden Ansteuersignalen aufweist, und wobei die mindestens eine erste Stufe (20) des Steuergeräts über mindestens eine erste Kommunikationsverbindung (26) mit einem übergeordneten Steuergerät des Kraftfahrzeugs in Verbindung steht und an eine Fahrzeugbatterie (VBAT) zur Energieversorgung des Steuergeräts und der mindestens einen Lichtquelle (10, 13, 15, 25) angeschlossen ist, **dadurch gekennzeichnet, dass** die mindestens eine erste Stufe (20) die elektrische Energie zur Versorgung der Beleuchtungseinrichtung zur Verfügung stellt und dass die mindestens eine zweite Stufe (12, 14, 16, 24) die von der mindestens einen ersten Stufe (20) zur Verfügung gestellte Energie an die mindestens eine Lichtquelle (10, 13, 15, 25) der Beleuchtungseinrichtung weiterleitet, wobei die mindestens eine erste Stufe (20) Mittel zur Erzeugung einer konstanten Zwischenspannung (U_Z) und Mittel (27) zur Beaufschlagung der mindestens einen zweiten Stufe (12, 14, 16, 24) mit der Zwischenspannung (U_Z) aufweist, und wobei die mindestens eine zweite Stufe (12, 14, 16, 24) Mittel (33) zum Wandeln der anliegenden Zwischenspannung (U_Z) in eine zur Versorgung der mindestens einen Lichtquelle (10, 13, 15, 25) geeignete Versorgungsspannung (U_V) aufweist.

2. Steuergerät nach Anspruch 1, **dadurch gekennzeichnet, dass** mindestens eine erste Stufe (20) des Steuergeräts in einem eigenen Gehäuse (23) außerhalb eines Gehäuses (2) der Beleuchtungseinrichtung angeordnet ist.

3. Steuergerät nach Anspruch 1 oder 2, **dadurch gekennzeichnet, dass** mindestens eine zweite Stufe (12, 14, 16, 24) des Steuergeräts innerhalb eines Gehäuses (2) der Beleuchtungseinrichtung angeordnet ist.

4. Steuergerät nach einem der Ansprüche 1 bis 3, **dadurch gekennzeichnet, dass** die mindestens eine erste Kommunikationsverbindung (26) nichthochstromfähige Steuersignalleitungen umfasst.

5. Steuergerät nach einem der Ansprüche 1 bis 3, **dadurch gekennzeichnet, dass** die mindestens eine erste Kommunikationsverbindung (26) ein Bussystem (LIN, CAN) umfasst, das zur Übertragung von Signalen nach einem bestimmten Kommunikationsprotokoll ausgebildet ist.

6. Steuergerät nach einem der Ansprüche 1 bis 5, **dadurch gekennzeichnet, dass** zur Beaufschlagung der Beleuchtungseinrichtung mit Ansteuersignalen zwischen der mindestens einen ersten Stufe (20) und der mindestens einen zweiten Stufe (12, 14, 16, 24) mindestens eine zweite Kommunikationsverbindung (28) ausgebildet ist.

7. Steuergerät nach Anspruch 6, **dadurch gekennzeichnet, dass** die mindestens eine zweite Kommunikationsverbindung (28) nichthochstromfähige Steuersignalleitungen (28.1, 28.2) umfasst.

8. Steuergerät nach Anspruch 6, **dadurch gekennzeichnet, dass** die mindestens eine zweite Kommunikationsverbindung (28) ein Bussystem (28.3) umfasst, das zur Übertragung von Signalen nach einem bestimmten Kommunikationsprotokoll ausgebildet ist.

9. Steuergerät nach einem der Ansprüche 6 bis 8, **dadurch gekennzeichnet, dass** die mindestens eine zweite Stufe (12, 14, 16, 24) zum Erfassen, wahlweise Aufbereiten und zur Übermittlung von Diagnoseinformationen an die mindestens eine erste Stufe (20) über die mindestens eine zweite Kommunikationsverbindung (28) ausgebildet ist.

10. Steuergerät nach einem der Ansprüche 1 bis 9, **dadurch gekennzeichnet, dass** das Steuergerät mehrere erste Stufen (20.1, 20.2) aufweist, wobei die ersten Stufen (20.1, 20.2) des Steuergeräts über mindestens eine dritte Kommunikationsverbindung (29) miteinander in Verbindung stehen.

11. Steuergerät nach Anspruch 10, **dadurch gekennzeichnet, dass** die mindestens eine dritte Kommunikationsverbindung (29) nichthochstromfähige Steuersignalleitungen umfasst.

12. Steuergerät nach Anspruch 10, **dadurch gekennzeichnet, dass** die mindestens eine dritte Kommunikationsverbindung ein Bussystem (LSE_BUS) umfasst, das zur Übertragung von Signalen nach einem bestimmten Kommunikationsprotokoll ausgebildet ist.

13. Steuergerät nach einem der Ansprüche 1 bis 12, **dadurch gekennzeichnet, dass** der mindestens einen zweiten Stufe (12, 14, 16, 24) des Steuergeräts mindestens eine Lichtquelle (10, 13, 15, 25) der Beleuchtungseinrichtung zugeordnet ist, wobei die mindestens eine zweite Stufe (12, 14, 16, 24) zur Energieversorgung der ihr zugeordneten mindestens einen Lichtquelle (10, 13, 15, 25) mit einer geeigneten Versorgungsspannung (U_V) und zur Ansteuerung der ihr zugeordneten mindestens einen Lichtquelle (10, 13, 15, 25) in Abhängigkeit von den Ansteuersignalen der ersten Stufe (20) ausgebildet ist.

14. Steuergerät nach Anspruch 13, **dadurch gekennzeichnet, dass** die mindestens eine zweite Stufe (12, 14, 16, 24) und die ihr zugeordnete mindestens eine Lichtquelle (10, 13, 15, 25) als ein gesondert handhabbares separates Bauelement ausgebildet sind.

15. Steuergerät nach einem der Ansprüche 1 bis 14, **dadurch gekennzeichnet, dass** die mindestens einen Lichtquelle (10, 13, 15, 25) der Beleuchtungseinrichtung eine Halbleiterlichtquelle, insbesondere eine Leuchtdiode, umfasst.

16. Steuergerät nach Anspruch 15, **dadurch gekennzeichnet, dass** die mindestens eine zweite Stufe (12, 14, 16, 24) und die ihr zugeordnete mindestens eine Halbleiterlichtquelle auf einem gemeinsamen Trägerelement, insbesondere auf einer gemeinsamen Platine (30), ausgebildet sind.

17. Beleuchtungseinrichtung für ein Kraftfahrzeug, umfassend ein Gehäuse (2), mindestens ein in dem Gehäuse (2) angeordnetes Lichtmodul (5, 6, 7) mit mindestens einer Lichtquelle (10, 13, 15) zur Erzeugung einer Lichtverteilung, und ein Steuergerät zur Energieversorgung und Ansteuerung der Beleuchtungseinrichtung, insbesondere des mindestens einen Lichtmoduls (5, 6, 7), **dadurch gekennzeichnet, dass** das Steuergerät nach einem der Ansprüche 1 bis 16 ausgebildet ist.

## Claims

1. A control device for controlling a lighting device for a motor vehicle and for supplying the lighting device with electrical energy, in which the lighting device includes at least one light source (10, 13, 15, 25) and the control device is subdivided into a plurality of stages and has at least one first stage (20) and at least one second stage (12, 14, 16, 24), and the at least one first stage (20) of the control device has the intelligence for controlling the lighting device and means (28) for subjecting the lighting device to control signals; in which the at least one second stage (12, 14, 16, 24) of the control device has means (31) for subjecting the at least one light source (10, 13, 15, 25) to a supply voltage (U_V) and means for controlling the at least one light source (10, 13, 15, 25) as a function of the control signals applied; and in which the at least one first stage (20) of the control device is in communication via at least one first communications connection (26) with a higher-order control device of the motor vehicle and is connected to a vehicle battery (VBAT) for supplying energy to the control device and to the at least one light source (10, 13, 15, 25), **characterized in that** the at least one first stage (20) makes the electrical energy for supplying the lighting device available; and that the at least one second stage (12, 14, 16, 24) carries the energy made available by the at least one first stage (20) to the at least one light source (10, 13, 15, 25) of the lighting device, and the at least one first stage (20) has means for generating a constant intermediate voltage (U_Z) and means (27) for subjecting the at least one second stage (12, 14, 16, 24) to the intermediate voltage (U_Z), and the at least one second stage (12, 14, 16, 24) has means (33) for converting the applied intermediate voltage (U_Z) into a supply voltage (U_V) suitable for supplying the at least one light source (10, 13, 15, 25).

2. The control device of claim 1, **characterized in that** at least one first stage (20) of the control device is disposed in its own housing (23) outside a housing (2) of the lighting device.

3. The control device of claim 1 or 2, **characterized in that** at least one second stage (12, 14, 16, 24) of the control device is disposed inside a housing (2) of the lighting device.

4. The control device of one of claims 1-3, **characterized in that** the at least one first communications connection (26) includes control signal lines that are not capable of carrying extra-high voltage.

5. The control device of one of claims 1-3, **characterized in that** the at least one first communications connection (26) includes a bus system (LIN, CAN), which is embodied for transmitting signals using a defined communications protocol.

6. The control device of one of claims 1-5, **characterized in that** for subjecting the lighting device to control signals, at least one second communications connection (28) is embodied between the at least one first stage (20) and the at least one second stage (12, 14, 16, 24).

7. The control device of claim 6, **characterized in that** the at least one second communications connection (28) includes control signal lines (28.1, 28.2) that are not capable of carrying extra-high voltage.

8. The control device of claim 6, **characterized in that** the at least one communications connection (28) includes a bus system (28.3), which is embodied for transmitting signals using a defined communications protocol.

9. The control device of one of claims 6-8, **characterized in that** the at least one second stage (12, 14, 16, 24) is embodied for detecting, selectively processing, and transmitting diagnostic information to the at least one first stage (20) via the at least one communications connection (28).

10. The control device of one of claims 1-9, **characterized in that** the control device has a plurality of first stages (20.1, 20.2), and the first stages (20.1, 20.2) of the control unit are in communication with one another via at least one third communications connection (29).

11. The control device of claim 10, **characterized in that** the at least one third communications connection (29) includes control signal lines that are not capable of carrying extra-high voltage.

12. The control device of claim 10, **characterized in that** the at least one third communications connection includes a bus system (LSE_BUS), which is embodied for transmitting signals using a defined communications protocol.

13. The control device of one of claims 1-12, **characterized in that** the at least one second stage (12, 14, 16, 24) of the control device is associated with at least one light source (10, 13, 15, 25) of the lighting device, and the at least one second stage (12, 14, 16, 24) is embodied for supplying energy to the at least one light source (10, 13, 15, 25) associated with it at a suitable supply voltage (U_V) and for controlling the at least one light source (10, 13, 15, 25) associated with it as a function of the control signals of the first stage (20).

14. The control device of claim 13, **characterized in that** the at least one second stage (12, 14, 16, 24) and the at least one light source (10, 13, 15, 25) associated with it are embodied as a separate component that can be manipulated separately.

15. The control device of one of claims 1-14, **characterized in that** the at least one light source (10, 13, 15, 25) of the lighting device includes a semiconductor light source, in particular a light emitting diode.

16. The control device of claim 5, **characterized in that** the at least one second stage (12, 14, 16, 24) and the at least one semiconductor source associated with it are embodied on a common substrate element, in particular a common printed circuit board (30).

17. A lighting device for a motor vehicle, including a housing (2), at least one light module (5, 6, 7) that is disposed in the housing (2) and has at least one light source (10, 13, 15) for generating a distribution of light, and a control device for supplying energy to and controlling the lighting device, in particular of the at least one light module (5, 6, 7), **characterized in that** the control device is embodied in accordance with one of claims 1-16.

## Revendications

1. Unité de commande destinée à commander un dispositif d'éclairage d'un véhicule à moteur et à alimenter le dispositif d'éclairage en énergie électrique, dans lequel le dispositif d'éclairage comprend au moins une source de lumière (10, 13, 15, 25) et l'unité de commande est subdivisée en une pluralité d'étages et comporte au moins un premier étage (20) et au moins un deuxième étage (12, 14, 16, 24), dans lequel ledit au moins un premier étage (20) de l'unité de commande comporte l'intelligence nécessaire pour contrôler le dispositif d'éclairage et des moyens (28) destinés à appliquer au dispositif d'éclairage des signaux de commande, et ledit au moins un deuxième étage (12, 14, 16, 24) de l'unité de commande comporte des moyens (31) destinés à appliquer à l'au moins une source de lumière (10, 13, 15, 25) une tension d'alimentation (U_V) et des moyens destinés à contrôler l'au moins une source de lumière (10, 13, 15, 25) en fonction des signaux de commande appliqués, et dans lequel ledit au moins un premier étage (20) de l'unité de commande est connecté par l'intermédiaire d'au moins une première liaison de communication (26) à une unité de commande de rang supérieur du véhicule à moteur et est raccordé à une batterie de véhicule (VBAT) destinée à alimenter en énergie l'unité de commande et ladite au moins une source de lumière (10, 13, 15, 25), **caractérisé en ce que** ledit au moins un premier étage (20) délivre l'énergie électrique destinée à alimenter le dispositif d'éclairage et **en ce que** ledit au moins un deuxième étage (12, 14, 16, 24) réachemine l'énergie délivrée par ledit au moins un premier étage (20) à ladite au moins une source de lumière (10, 13, 15, 25), dans lequel ledit au moins un premier étage (20) comporte des moyens destinés à générer une tension intermédiaire constante (U_Z) et des moyens (27) destinés à appliquer audit au moins un deuxième étage (12, 14, 16, 24) la tension intermédiaire (U_Z), et dans lequel ledit au moins un deuxième étage (12, 14, 16, 24) comporte des moyens (33) destinés à convertir la tension intermédiaire (U_Z) appliquée en une tension d'alimentation (U_V) appropriée pour alimenter ladite au moins une source de lumière (10, 13, 15, 25).

2. Unité de commande selon la revendication 1, **caractérisée en ce qu'**au moins un premier étage (20) de l'unité de commande est disposé dans un boîtier séparé (23) à l'extérieur d'un boîtier (2) du dispositif d'éclairage.

3. Unité de commande selon la revendication 1 ou 2, **caractérisée en ce qu'**au moins un deuxième étage (12, 14, 16, 24) de l'unité de commande est disposé à l'intérieur d'un boîtier (2) dudit dispositif d'éclairage.

4. Unité de commande selon l'une quelconque des revendications 1 à 3, **caractérisée en ce que** ladite au moins une première liaison de communication (26) comprend des lignes de signaux de commande à courant faible.

5. Unité de commande selon l'une quelconque des revendications 1 à 3, **caractérisée en ce que** ladite au moins une première liaison de communication (26) comprend un système de bus (LIN, CAN), qui est conçu pour la transmission de signaux conformes à un protocole de communication particulier.

6. Unité de commande selon l'une quelconque des revendications 1 à 5, **caractérisée en ce qu'**au moins une deuxième liaison de communication (28) est réalisée pour appliquer au dispositif d'éclairage des signaux de commande entre ledit au moins un premier étage (20) et ledit au moins un deuxième étage (12, 14, 16, 24).

7. Unité de commande selon la revendication 6, **caractérisée en ce que** ladite au moins une deuxième liaison de communication (28) comprend des lignes de signaux de commande à courant faible (28.1, 28.2).

8. Unité de commande selon la revendication 6, **caractérisée en ce que** ladite au moins une deuxième liaison de communication (28) comprend un système de bus (28.3) qui est conçu pour la transmission de signaux conformément à un protocole de communication particulier.

9. Unité de commande selon l'une quelconque des revendications 6 à 8, **caractérisée en ce que** ledit au moins un deuxième étage (12, 14, 16, 24) est conçu pour détecter, traiter de manière sélective et transmettre des informations de diagnostic audit au moins un premier étage (20) par l'intermédiaire de ladite au moins une deuxième liaison de communication (28).

10. Unité de commande selon l'une quelconque des revendications 1 à 9, **caractérisée en ce que** l'unité de commande comporte une pluralité de premiers étages (20.1, 20.2), dans lequel les premiers étages (20.1, 20.2) de l'unité de commande sont connectés les uns aux autres par l'intermédiaire d'au moins une troisième liaison de communication (29).

11. Unité de commande selon la revendication 10, **caractérisée en ce que** ladite au moins une troisième liaison de communication (29) comprend des lignes de signaux de commande à courant faible.

12. Unité de commande selon la revendication 10, **caractérisée en ce que** ladite au moins une troisième liaison de communication comprend un système de bus (LSE_BUS) qui est conçu pour la transmission de signaux conformes à un protocole de communication particulier.

13. Unité de commande selon l'une quelconque des revendications 1 à 12, **caractérisée en ce qu'**au moins une source de lumière (10, 13, 15, 25) du dispositif d'éclairage est associée audit au moins un second étage (12, 14, 16, 24) de l'unité de commande, dans lequel ledit au moins un deuxième étage (12, 14, 16, 24) est conçu pour alimenter en énergie ladite au moins une source de lumière (10, 13, 15, 25) qui lui est associée avec une tension d'alimentation (U_V) appropriée et pour attaque ladite au moins une source de lumière (10, 13, 15, 25) qui lui est associée en fonction des signaux de commande du premier étage (20) .

14. Unité de commande selon la revendication 13, **caractérisée en ce que** ledit au moins un deuxième étage (12, 14, 16, 24) et ladite au moins une source de lumière (10, 13, 15, 25) qui lui est associée sont réalisés en tant que composant séparé pouvant être géré séparément.

15. Unité de commande selon l'une quelconque des revendications 1 à 14, **caractérisée en ce que** ladite au moins une source de lumière comprend (10, 13, 15, 25) du dispositif d'éclairage comprend une source de lumière à semi-conducteur, en particulier une diode électroluminescente.

16. Unité de commande selon la revendication 15, **caractérisée en ce que** ledit au moins un deuxième étage (12, 14, 16, 24) et ladite au moins une source de lumière à semi-conducteur qui lui est associée sont réalisés sur un élément de support commun, en particulier une carte de circuit commune (30).

17. Dispositif d'éclairage destiné à un véhicule à moteur, comprenant un boîtier (2), au moins un module d'éclairage (5, 6, 7) disposé dans le boîtier (2), comportant au moins une source de lumière (10, 13, 15) destinée à générer une distribution de lumière, et une unité de commande destinée à alimenter en énergie et à contrôler le dispositif d'éclairage, en particulier ledit au moins un module d'éclairage (5, 6, 7), **caractérisé en ce que** l'unité de commande est réalisée selon l'une quelconque des revendications 1 à 16.
